# EUROPEAN PATENT APPLICATION

(11) **EP 4 289 271 A2**
(43) Date of publication of application: **13.12.2023**
(21) Application number: 23202782.1
(22) Date of filing: 05.04.2018
(51) Int. Cl.: A01N 43/78

(54) **METHOD AND POLYMERIC MATERIAL HAVING KNOCK-DOWN OR BLOOD FEED INHIBITION ACTIVITY AGAINST MOSQUITOES**

(30) Priority: 05.04.2017 EP 17165115
(62) Divisional of application: 18717007.1
(71) Applicant: SYNGENTA PARTICIPATIONS AG, 4058 Basel (CH)
(72) Inventor: HOPPE, Mark, 4332 Stein (CH); HUETER, Ottmar Franz, 4332 Stein (CH); MAIENFISCH, Peter, 4332 Stein (CH); WEGE, Philip, Bracknell, RG42 6EY (GB); CAMBLIN, Philippe, 4058 Basel (CH)
(74) Representative: SYNGENTA IP

(57) **Abstract**

With the present invention it has now been found that certain 4-trifluoromethylnicotinamide mixtures and active compound compositions comprising such mixtures are suitable for controlling nuisance, disease carrying or haematophagous (blood feeding) insects pests incl. dipteran, triatominae, culicoide and cimicidae insect pests by knockdown or by or blood feed inhibition. In one embodiment, dipteran pests are selected from flies, biting midges and mosquitoes, including insecticide-resistant flies, midges and mosquitoes, as well as fly, midge and mosquito vectors of pathogenic disease. Target cimicidae insect pests are selected from bed bugs. Target triatominae pests are selected from kissing bugs Other aspects of the present invention will also be apparent in the detailed description which follows.

## Description

The field of the invention relates to insect pest control and in particular dipteran, cimicidae, culicoide and triatominae insect control. The active compound compositions of this invention are particularly useful to knockdown or inhibit blood feeding of insects such as mosquitos, flies, biting midges, kissing bugs and bed bugs that are a nuisance, and those which are haematophagous, or are vectors of human or animal diseases and/or cause allergic reactions.

More specifically, the present invention relates to control of nuisance, disease carrying or haematophagous insect pests by knockdown or blood feed inhibition with certain active compound compositions comprising mixtures of 4-trifluoromethylnicotinamide with other selected insecticide compounds, and to related products, methods, treated substrates, and integrated insect pest management solutions.

House flies and stable flies are common dipteran insects around horse barns, stables, and corrals. Persistent house flies are very annoying whereas stable flies give painful bites making activities unpleasant for humans and making horses more difficult to manage. Biting midges can be a nuisance to campers, fishermen, hunters, hikers, gardeners, and others who spend time outdoors. These dipterans pests can also be potential carriers of human and animal pathogens. Thus, the effective control of such dipteran pests is highly desirable.

Mosquitoes are very harmful dipteran insects particularly in view of hygiene as these insects can be vectors of human pathogenic disease such as dengue, yellow fever, encephalitis, malaria, filariasis, chikungunya, and Zika virus. Mosquito control manages the population of mosquitoes to reduce their damage to human health, economies, and enjoyment. Mosquito-control operations are targeted against three different problems:
1. Nuisance mosquitoes bother people around homes or in parks and recreational areas;
2. Economically important mosquitoes reduce real estate values, adversely affect tourism and related business interests, or negatively impact livestock or poultry production;
3. Public health is the focus when mosquitoes are vectors, or transmitters, of infectious disease.

Bed bugs are parasitic insects of the family Cimicidae. They feed preferentially on human blood and the blood of other warm-blooded animals and are mainly active at night. Bites from bed bugs often go undetected at the time, and in many instances there is no visible sign of the bite. However, they cause a skin condition known as cimicosis which is accompanied by serious skin itching which can lead to anxiety, stress and insomnia, as well as secondary infection as a result of scratching. Largely because of their nocturnal habits, bed bugs typically are hard to detect and eradicate.

Insecticidal compositions have commonly been used to control dipteran insect pests. In order for an insecticide to act at its target site, it must enter the insect through one or more absorption routes, including absorption through the cuticle, through proprioceptive and/or tactile receptors, orally through the consumption of treated foliage, sap or edible bait, or by inhalation through the spiracles as a vapour. Among the characteristics used to evaluate contact insecticidal compositions are the insecticide's 'knockdown' and 'mortality' characteristics. Knockdown refers to a quick, short-term immobilization that can precede mortality of the insect pest. In some cases, insect pests can recover from knockdown immobilization.

Due to natural selection, dipteran insect pests including flies and mosquitoes can develop a resistance to chemicals and therefore there is a continuous need to improve the currently available active compound compositions and methods of use thereof in order to allow for efficient fly and/or mosquito control and resistance management. For example, metabolic resistance confers resistance to certain pyrethroids, whereas target-based resistance extends to all pyrethroids and DDT, and is known as knockdown resistance (kdr).

Pyrethroid resistance, caused either by specific detoxification enzymes or an altered target site mechanism (kdr-type mutations in the sodium channels), has been reported in most continents in the majority of medically important mosquitoes species, such as *Anopheles gambiae* in Africa and *Aedes aegypti* in Asia. If such resistance continues to develop and spread at the current rate, it may render such insecticides ineffective in their current form in the not too distant future. Such a scenario would have potentially devastating consequences in public health terms, since there are as yet no obvious alternatives to many of the uses of pyrethroids.

The pesticide flonicamid and its metabolites TFNA, TFNA-AM, and TFNG are known (see, e.g., US patent no. 5,360,806). Flonicamid was developed in 2000 as a selective agent against aphids and other sucking insects. The mode of action has been identified as suppressing feeding and movement by aphids. While the activity of flonicamid is good against certain insects, it has not been shown to be active against dipteran pests such as flies or mosquitoes, particularly by knockdown or blood feed inhibition. Moreover, no fly or mosquito knockdown or blood feed inhibiting activity of the above-noted flonicamid metabolites have been reported.

With the present invention it has now been found that certain active compound compositions comprising mixtures of 4-trifluoromethylnicotinamide with certain insecticides are surprisingly useful for controlling nuisance, disease carrying or haematophagous (blood feeding) insects pests incl. dipteran, triatominae, culicoide and cimicidae insect pests by knockdown or by or blood feed inhibition. In one embodiment, dipteran pests are selected from flies and mosquitoes, including insecticide-resistant flies and mosquitoes, as well as fly and mosquito vectors of pathogenic disease.

Target cimicidae insect pests are selected from bed bugs. Target triatominae pests are selected from kissing bugs. Target culicoide pests are selected from biting midges. Other aspects of the present invention such as usefulness for decreasing dipteran (e.g., mosquito), triatominae or cimicidae insect vector populations will also be apparent in the detailed description which follows.

More specifically, the active compounds suitable for use in the active compound compositions, methods, products, treated substrates, and integrated solutions of the invention are selected from mixtures of 4-trifluoromethylnicotinamide with certain insecticide compounds that are capable of being "picked-up" by target dipteran, triatominae, culicoide and cimicidae insect pests and cause rapid knockdown of the target insect or inhibit the target insect from taking a blood meal if such insect is haematophagous. In partciular, the inventive mixtures of 4-trifluoromethylnicotinamide with selected insecticides exhibit rapid knockdown or blood feed inhibiting activity against such insect pests without requiring oral administration such as by consumption of treated bait or other foodsource containing such compounds.

More particularly, the present invention provides compositions and methods for controlling nuisance, disease carrying or haematophagous dipteran, triatominae, culicoide and/or cimicidae insect pests by knockdown or by blood feed inhibition with mixtures of a first insecticide (a) 4-trifluoromethylnicotinamide (TFNA-AM) (also known as 4-(trifluoromethyl)pyridine-3-carboxamide) which is represented by the structural formula (I): 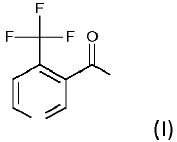 with a second insecticide (b) selected from the group consisting of those listed inTable 1 and Table 2 below:

**Table 1**

| Compounds useful in mixtures with 4-trifluoromethylnicotinamide. | |
|---|---|
| Compound No. | Name |
| 1. | Abamectin |
| 2. | alpha-cypermethrin |
| 3. | Amitraz |
| 4. | Avermectin |
| 5. | Azadirachtin |
| 6. | Bendiocarb |
| 7. | Bifenthrin |
| 8. | Broflanilide |
| 9. | Buprofezin |
| 10. | Clothianidin |
| 11. | Cypermethrin |
| 12. | Cyromazine |
| 13. | d-d, trans cyphenothrin |
| 14. | Diafenthiuron |
| 15. | Dicofol |
| 16. | Dinotefuran |
| 17. | Diflumetorim |
| 18. | Emamectin benzoate |
| 19. | Etofenprox |
| 20. | Etoxazole |
| 21. | Fenitrothion |
| 22. | Fenazaquin |
| 23. | Fenoxycarb |
| 24. | Fenpyroximate |
| 25. | Fipronil |
| 26. | Fluacrypyrim |
| 27. | Flubendiamide |
| 28. | Flupyradifurone |
| 29. | Fluazinam |
| 30. | Imidacloprid |
| 31. | Malathion |
| 32. | Metaflumizone |
| 33. | Picoxystrobin |
| 34. | Propoxur |
| 35. | Pyriproxyfen |
| 36. | Spinosad |
| 37. | Sulfoxaflor |
| 38. | Tebufenpyrad |
| 39. | Thiamethoxam |
| 40. | Trifloxystrobin |
| 41. | Triflumizopyrim |

In addition to those alkyl esters included in Table 1, certain other alkyl ester compounds also are useful in mixtures with 4-trifluoromethylnicotinamide and are shown in Table 2 and are represented by the formulae 42 - 63. Such alkyl ester compounds are known, for example, from published PCT application WO 2016/193267.

**Table 2**

| Compound | Structure |
|---|---|
| 42 | 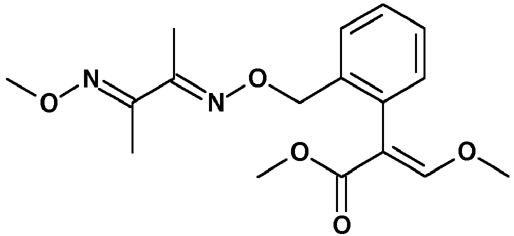 |
| 43 | 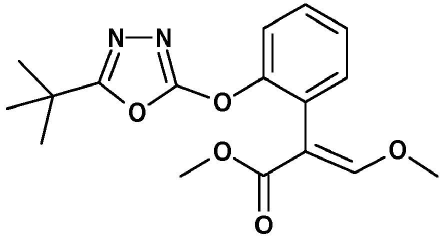 |
| 44 | 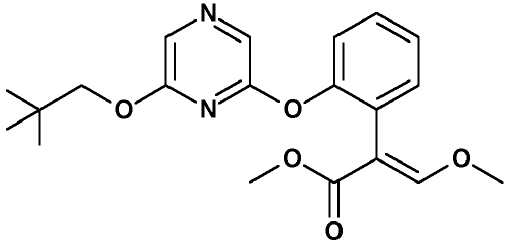 |
| 45 | 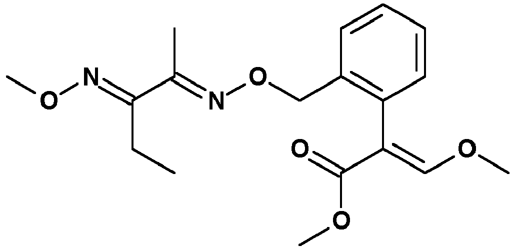 |
| 46 | 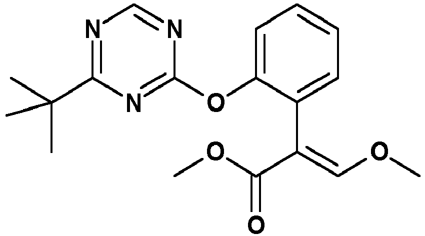 |
| 47 | 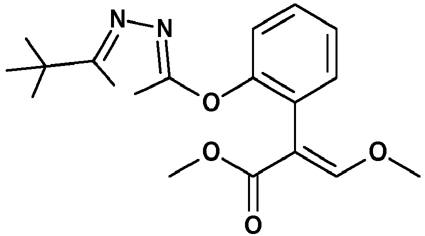 |
| 48 | 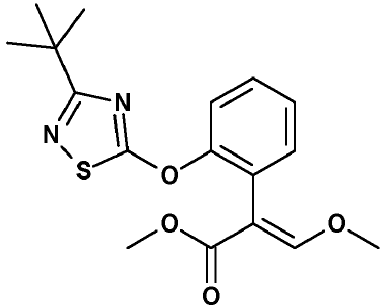 |
| 49 | 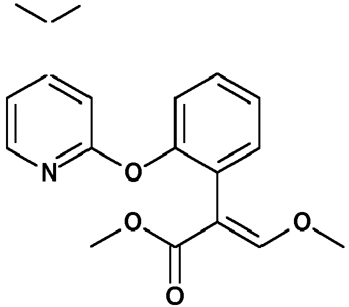 |
| 50 | 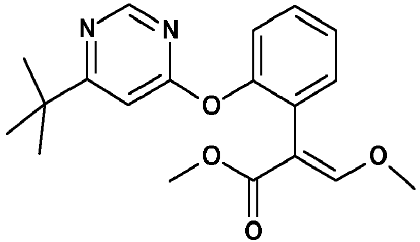 |
| 51 | 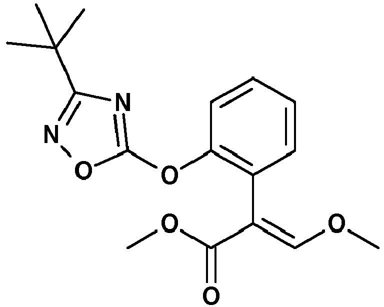 |
| 52 | 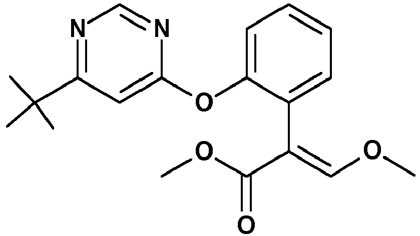 |
| 53 | 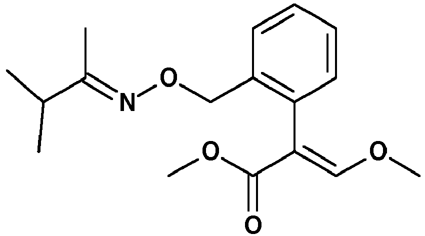 |
| 54 | 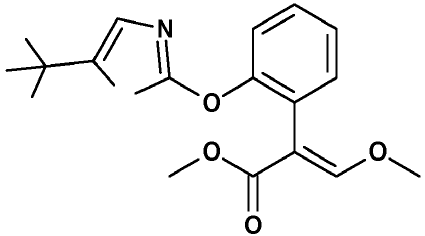 |
| 55 | 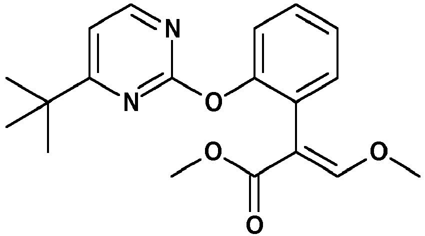 |
| 56 | 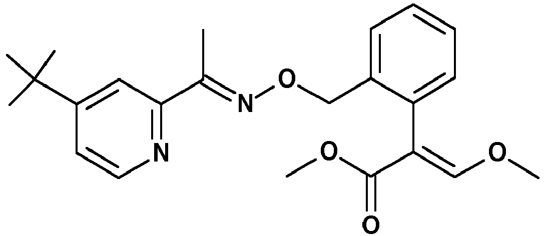 |
| 57 | 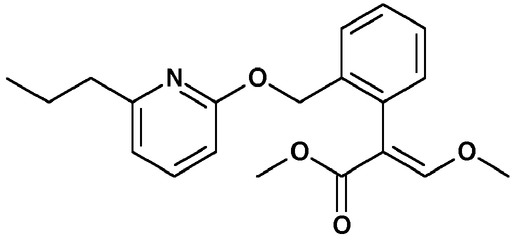 |
| 58 | 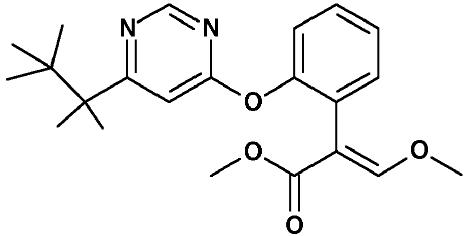 |
| 59 | 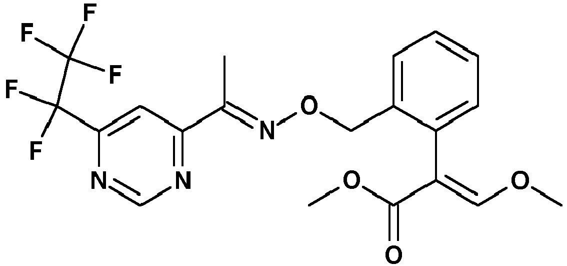 |
| 60 | 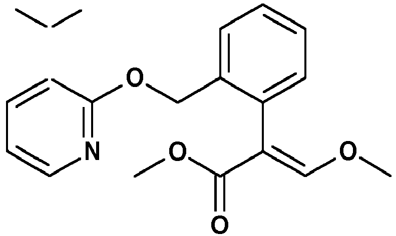 |
| 61 | 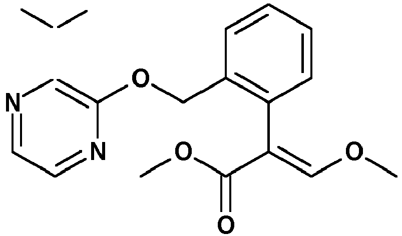 |
| 62 | 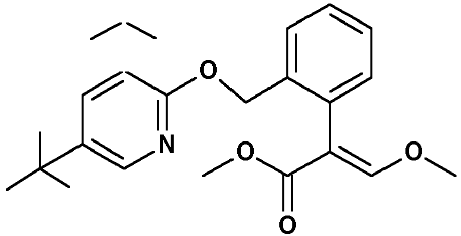 |
| 63 | 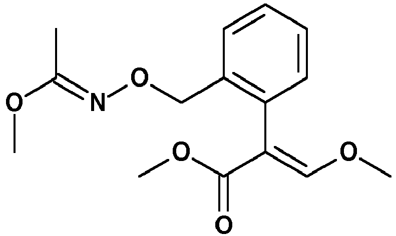 |
| 64 | 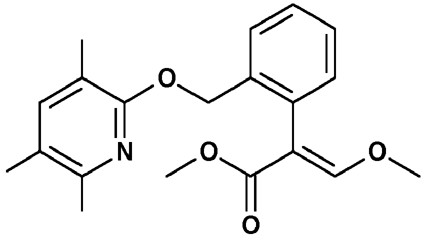 |

Accordingly, in a first aspect the present invention provides for insecticidal mixtures of 4-trifluoromethylnicotinamide with an insecticide compound selected from the group consisting of a compound as listed in Table 1 and Table 2, and secondly, the present invention provides a method for using such mixtures in controlling nuisance, disease carrying or haematophagous dipteran, triatominae, culicoide or cimicidae insects pests, in particular such haematophagous insect pests (including mosquitoes) by knockdown or by blood feed inhibition.

In connection with the methods of the second aspect, the 4-trifluoromethylnicotinamide is useful in combination with the other insecticides of Tables 1 or 2 whether applied either simultaneously or sequentially. In particular, it has been found that mosquitoes which pick-up a 4-trifluoromethylnicotinamide compound are knocked down or debilitated and thereby become more prone to being controlled by the combination of such 4-trifluoromethylnicotinamide with other suitable insectides as shown, for example, in Tables 1 or 2.

Nuisance, disease carrying or haematophagous dipteran, triatominae, culicoide and/or cimicidae insects pests are sometimes referred to herein as "target insects" in singular or plural depending on the context.

In a third aspect, the present invention provides compositions, products, and treated articles (such as non-living material substrates and other non-living materials or non-living target insect loci) comprising a mixture of 4-trifluoromethylnicotinamide with an insecticide compound selected from the group consisting of the compounds listed in Tables 1 and 2. In particular, a knockdown or blood feed inhibiting effective amount of a mixture of 4-trifluoromethylnicotinamide with an insecticide compound selected from the group consisting of the compounds listed in Tables 1 and 2 is utilized.

In a fourth aspect, the present invention provides integrated target insect (incl. mosquito) management or control solutions comprising one or more mixtures of 4-trifluoromethylnicotinamide with a compound as shown in Table 1 or Table 2.

In a fifth aspect, a method of controlling target insect pests, preferably mosquito vectors of pathogenic disease, which comprises contacting a target insect pest or its environment with a composition comprising a knockdown or blood feed inhibiting effective amount of a mixture of 4-trifluoromethylnicotinamide with a compound selected from the group consisting of the compounds listed in Tables 1 and 2 is made available.

In one embodiment, suitable targets for such first through fifth aspects include dipteran, triatominae, culicoide or cimicidae pests include flies, midges, mosquitoes, kissing bugs and bed bugs, especially such pests which are vectors of pathogenic or allergic disease.

In another embodiment, a 4-trifluoromethylnicotinamide mixture with at least one of the compounds 1 - 20, are utilized in such first through fifth aspects.

In a further embodiment, a 4-trifluoromethylnicotinamide mixture with at least one of the compounds 21 - 41, are utilized in such first through fifth aspects.

In another embodiment, a 4-trifluoromethylnicotinamide mixture with at least one of the compounds of table 2, are utilized in such first through fifth aspects. Among the suitable compounds of table 2 there can be noted compounds of the formulae 46 - 50. Additionally, there can be noted the compounds of the formulae 51 to 56.

Unless otherwise specified, general reference to 4-trifluoromethylnicotinamide mixtures herein pertains to mixtures of 4-trifluoromethylnicotinamide with at least one compound of Tables 1 or 2, and which are useful in accordance with such first through fifth and aspects as further detailed herein.

In addition, unless otherwise specified, general reference to active compound compositions herein pertains to mixtures comprising 4-trifluoromethylnicotinamide with at least one compound of Tables 1 or 2 useful in accordance with such first through fifth and aspects as further detailed herein.

In another embodiment, such active compound compositions comprise mixtures of 4-trifluoromethylnicotinamide and one or more of the compounds abamectin, amitraz, azadirachtin, bendiocarb, bifenthrin, broflanilide, buprofezin, clothianidin, cypermethrin, and cyromazine which can be utilized in such first through fifth aspects.

In yet another embodiment, the 4-trifluoromethylnicotinamide mixtures are with compounds selected from the group consisting of d-d, trans cyphenothrin, diafenthiuron, dicofol, dinotefuran, diflumetorim, emamectin benzoate, etofenprox, etoxazole, fenitrothion, and fenoxycarb are provided and can be used in such first through fifth aspects.

In a further embodiment, such active compound compositions comprise mixtures of 4-trifluoromethylnicotinamide and one or more of the compounds fipronil, fluacrypyrim, flubendiamide, flupyradifurone, fluazinam, imidacloprid, malathion, metaflumizone, picoxystrobin, and propoxur that can be utilized in such first through fifth aspects.

In another embodiment, the 4-trifluoromethylnicotinamide mixtures are provided with compounds selected from the group consisting of pyriproxyfen, spinosad, sulfoxaflor, tebufenpyrad, thiamethoxam, trifloxystrobin, triflumizopyrim and can be used in such first through fifth aspects.

Additionally, there are provided 4-trifluoromethylnicotinamide mixtures with alpha-cypermethrin, avermectin, fenazaquin, and fenpyroximate which can be used in such first through fifth aspects.

In another embodiment, the foregoing aspects are suitable for causing knockdown or blood feed inhibition of a dipteran, triatominae, culicoide or cimicidae insect pest when carried out in accordance with the present invention.

As well as the biological efficacy of the 4-trifluoromethylnicotinamide mixtures of the present invention against a dipteran, triatominae, culicoide or cimicidae insect pest (incl. moqusitos and resistant strains of such mosquitos), other considerations for selecting a suitable 4-trifluoromethylnicotinamide mixture could include its safety (such as its toxicity, persistence) to the environment, including to the users of a vector control solution; its suitability for making a vector control solution product (whether indoor residual spray formulation, mosquito net, or another type), its suitability for adherence and availability on a surface over a period of time (in the event the solution is an indoor residual spray), and also its suitability for incorporation into a polymer product (such as a net) so that the 4-trifluoromethylnicotinamide mixture would be readily available to control mosquitos on the surface of the net over a period of time and the nets can withstand multiple washings.

In an embodiment of each aspect of the present invention involving a vector control solution, the development of vector-borne diseases may be reduced by the control of the dipteran, triatominae, culicoide or cimicidae insect pest, in particular by mosquito control by knockdown or by blood feed inhibition.

The 4-trifluoromethylnicotinamide mixture compositions and methods of the invention are particularly suitable for the control of mosquitoes including mosquito vectors of human or mammalian pathogenic disease. Mosquito vector control is any method to limit or eradicate mosquito species which transmit disease pathogens. The most frequent types of mosquito vector control employ a variety of strategies.

Mosquito vector control focuses on utilizing preventative methods to control or eliminate mosquito populations. Common preventative measures are
- habitat control - removing or reducing areas where mosquitoes can easily breed can help limit population growth. For example, stagnant water removal, destruction of old tires and cans which serve as mosquito breeding environments and good management of stored water can reduce areas of excessive mosquito incidence.
- reducing contact - limiting exposure to mosquitoes can reduce infection risks significantly. For example, bed nets, window screens on homes, or protective clothing can help reduce the likelihood contact with mosquitoes. To be effective this requires education and promotion of methods among the population to raise the awareness of mosquito threats.
- chemical control - insecticides, larvicides, and repellents can be used to control mosquitoes. For example, larvicides can be used in mosquito breeding zones; insecticides can be applied to house walls or bed nets, and use of personal repellents can reduce incidence of mosquitoes bites and thus infection. The use of pesticides for mosquito vector control is promoted by the World Health Organization (WHO) and has proven to be highly effective.
- biological control - the use of natural mosquito vector predators, such as bacterial toxins or botanical compounds, can help control mosquito populations. Using fish that eat mosquito larvae, has been demonstraited to have some success.
- population control through the release of sterilized, or genetically modified, male mosquitoes has also been shown to control mosquito vector populations and reduce infection risks.

A number of considerations is taken into account when determining which 4-trifluoromethylnicotinamide mixtures would be suitable for use in a particular mosquito vector control strategy, such as favourable safety profile, biological performance and affordability.

In one embodiment, a mixture selected from the 4-trifluoromethylnicotinamide mixtures shown in Table 1 or Table 2 in accordance with the compositions, methods and other aspects of the present invention are useful in controlling mosquitoes, in particular mosquitoes selected from the genus *Anopheles, Culex* and *Aedes.* Examples include *Aedes aegypti, Aedes albopictus, Aedes japonicas, Aedes vexans, Coquillettidia perturbans, Culex molestus, Culex pallens, Culex pipiens, Culex quinquefasciatus, Culex restuans, Culex tarsalis, Anopheles albimanus, Anopheles albitarsis, Anopheles annularis, Anopheles aquasalis, Anopheles arabiensis, Anopheles aconitus, Anopheles atroparvus, Anopheles balabacensis, Anopheles* coluzzii, *Anopheles culicifacies, Anopheles darlingi, Anopheles dirus, Anopheles farauti, Anopheles flavirostris, Anopheles fluviatilis, Anopheles freeborni, Anopheles funestus, Anopheles gambiae s.l., Anopheles koliensis, Anopheles labranchiae, Anopheles lesteri, Anopheles leucosphyrus, Anopheles maculatus, Anopheles marajoara, Anopheles melas, Anopheles merus, Anopheles messeae, Anopheles minimus, Anopheles moucheti, Anopheles nili, Anopheles nuneztovari, Anopheles plumbeus, Anopheles pseudopunctipennis, Anopheles punctipennis, Anopheles punctulatus, Anopheles quadrimaculatus, Anopheles sacharovi, Anopheles sergentii, Anopheles sinensis, Anopheles stephensi, Anopheles subpictus, Anopheles sundaicus, Anopheles superpictus,* and *Mansonia titillans, Ochlerotatus stimulans, Ochlerotatus japonicas* (each of which is an example of a mosquito capable of carrying or vectoring a pathogenic disease).

By control is meant that a 4-trifluoromethylnicotinamide mixture composition useful in the methods and other aspects of the invention is employed in a manner that causes knockdown or blood feeding inhibition of the target insect and, in particular, mosquito pest such that biting does not occur or in a manner that decreases pest populations such that biting does not occur as frequently.

In one embodiment, a 4-trifluoromethylnicotinamide mixture as shown in Table 1 or Table 2 useful in the above-noted compositions, methods and other aspects of the invention cause symptoms as soon as they enter the target insect and, in particular, mosquito insect pest and are considered extremely fast-acting, causing rapid "knockdown".

In one embodiment, by knockdown is meant a rapid immobilisation or disability of the target insect and, in particular, mosquito insect affected by a 4-trifluoromethylnicotinamide mixture as shown in Table 1 or Table 2 resulting in an induced incapacity for coordinated movement such as flight, walking and/or inability to blood feed such as taking a blood meal.

In another embodiment, by knockdown is meant a state of intoxication and partial paralysis of the target insect and, in particular, mosquito insect affected by a 4-trifluoromethylnicotinamide mixture as shown in Table 1 or Table 2 in a manner which may precede or increase the susceptibility of such insect to being killed.

In a particular embodiment, by control is meant that a 4-trifluoromethylnicotinamide mixture as shown in Table 1 or Table 2 causes rapid "knockdown" or blood feed inhibition of the mosquito pest when used in accordance with the invention.

When the target insect is a mosquito, such control means that biting does not occur or means that mosquito populations are decreased such that biting does not occur as frequently.

In one embodiment, a 4-trifluoromethylnicotinamide mixture as shown in Table 1 or Table 2 useful in the compositions, methods and other aspects of the invention cause symptoms as soon as they enter the mosquito and are considered extremely fast-acting, causing rapid "knockdown" or blood feed inhibition.

In an embodiment, 4-trifluoromethylnicotinamide mixtures selected from those as shown in Table 1 and Table 2 are useful in controlling one or more mosquitos selected from the genus *Anopheles, Culex* and *Aedes,* in particular one or more of *Aedes aegypti, Aedes albopictus, Aedes japonicas, Aedes vexans, Culex molestus, Culex pallens, Culex pipiens, Culex quinquefasciatus, Culex restuans, Culex tarsalis, Anopheles albimanus, Anopheles arabiensis, Anopheles darlingi, Anopheles dirus, Anopheles funestus, Anopheles gambiae s.l., Anopheles melas, Anopheles minimus, Anopheles sinensis, Anopheles stephensi, Mansonia titillans.*

In an embodiment, the 4-trifluoromethylnicotinamide mixtures of Tables 1 or 2 are useful in the compositions, methods and other aspects of the invention to control adult mosquitoes.

Insecticide resistant mosquito species have also been detected and accordingly in an embodiment, a 4-trifluoromethylnicotinamide mixture of Table 1 or Table 2 useful in the compositions, methods and other aspects of the invention is suitable for controlling insecticide-resistant mosquitoes, such as pyrethroid, carbamate and/or organophosphate-resistant mosquitoes.

Such mosquito insecticide knockdown resistance is widespread and typically can be either metabolic (i.e., confers resistance to certain pyrethroids) or target-site-based (i.e., extends to all pyrethroids). Quite notably, such knockdown resistance can be mitigated by the methods and other aspects of the invention when otherwise insecticide resistant mosquitoes that are exposed to a 4-trifluoromethylnicotinamide mixture of Table 1 or Table 2 may be more susceptible to being controlled.

Pyrethroids are the only insectides that have obtained WHO recommendation against Malaria vectors on both Indoor Residuals Sprays (IRS) and Long Lasting Insecticidal Mosquito Nets (LLINs), in the form of alpha-cypermethrin, bifenthrin, cyfluthrin, permethrin, deltamethrin, lambda-cyhalothrin and etofenprox. It has been the chemical class of choice in agriculture and public health applications over the last several decades because of its relatively low toxicity to humans, rapid knock-down effect, relative longevity (duration of 3-6 months when used as IRS), and low cost. However, massive use of pyrethroids in agricultural applications and for vector control led to the development of resistance in major malaria and dengue vectors. Strong resistance has e.g. been reported for the pyrethroid Deltamethrin (and Permethrin) for the *Anopheles gambiae* Tiassalé (from southern Cote d'Ivoire) strain (Constant V.A. Edi et al., Emerging Infectious Diseases; Vol. 18, No. 9, September 2012). Pyrethroid resistance was also reported for Permethrin, Deltamethrin and Lambda-Cyhalothrin for the *Aedes aegypti* Cayman Island strain (Angela F. Harris et al., Am. J. Trop. Med. Hyg., 83(2), 2010) and Alpha- Cypermethrin, Permethrin and Lambda-Cyhalothrin for certain *Anopheles* strains (Win Van Bortel, Malaria Journal, 2008, 7:102).

In another embodiment of the invention, the 4-trifluoromethylnicotinamide mixtures of Table 1 or Table 2 can be suitable for use against insecticide-resistant mosquitoes that are selected from *Anopheles gambiae* RSPH, *Anopheles gambiae* Tiassalé, *Anopheles gambiae* Akron, *Anopheles gambiae* Kisumi Rdl, *Anopheles arabiensis* NDjamina, *Anopheles gambiae* VK7, *Anopheles funestus* FUMOZ-R, *Aedes aegypti* Grand Cayman and *Culex quinquefasciatus* strain POO.

*Anopheles gambiae,* strain RSPH is a multi-resistant mosquito (target-site and metabolic-resistance) that is described in the reagent catalog of the Malaria Research and Reference Reagent Resource Center (www.MR4.org; MR4-number: MRA-334).

*Anopheles gambiae,* strain Tiassalé is a multi-resistant mosquito (target and metabolic-resistant strain) which shows cross-resistance between carbamates, organophosphates and pyrethroids and is described in Constant V.A. Edi et al., Emerging Infectious Diseases; Vol. 18, No. 9, September 2012 and Ludovic P Ahoua Alou et al., Malaria Journal 9: 167, 2010).

*Anopheles gambiae,* strain AKRON is a multi-resistant mosquito (target and metabolic-resistant strain) and is described in Djouaka F Rousseau et al., BMC Genomics, 9:538; 2008.

*Anopheles coluzzii,* strain VK7 is a target-resistant mosquito and is described in Dabire Roch Kounbobr et al., Malaria Journal, 7: 188, 2008.

*Anopheles funestus,* strain FUMOZ is a metabolic -resistant strain and is described in Hunt et al., Med Vet Entomol. 2005 Sep; 19(3):271-5). In this article it has been reported that *Anopheles funestus* - as one of the major malaria vector mosquitoes in Africa - showed resistance to pyrethroids and carbamate insecticides in South Africa.

*Anopheles gambiae,* strain Kisumu Rdl, a dieldrin resistant strain from Kenya.

*Anopheles arabiensis,* strain NDjamina, a pyrethroid resistant from Chad.

*Aedes aegypti,* strain Grand Cayman is a target-resistant mosquito and is described in Angela F. Harris, Am. J. Tro. Med. Hyg. 83(2), 2010.

*Culex quinquefasciatus* (metabolic -resistant to DDT strain P00); received from Texchem, Penang, Malaysia.

Vector control solution are means to control a target insect vector, such as a mosquito. Examples of such means are compositions, products, and treated articles, which include a non-living substrate or non-living material incorporating (e.g. coated or impregnated with) at least one 4-trifluoromethylnicotinamide mixture of Table 1 or Table 2, as well as spray products (e.g. indoor sprays, and aerosol products) comprising a 4-trifluoromethylnicotinamide mixture of Table 1 or Table 2, paint compositions comprising such mixtures, and products or treated articles comprising such mixtures.

Examples of integrated target insect, esp. mosquito vector management or control solutions of the invention, such as solutions for controlling mosquito bites or decreasing relevant mosquito populations, include the use of such compositions, products, treated articles and non-living substrates of the invention at a locus of potential or known interaction between the mosquito vector and an animal, including a human, that is susceptible to a pathogenic disease infection transmitted by such vector. Suitable integrated solutions within the scope of the present invention also include identifying mosquito breeding sites and positioning such compositions, products, treated articles and non-living substrates of the invention at such sites.

Examples of a non-living substrate or non-living material of the invention are self-supporting film/sheet (e.g., screens), threads, fibres, yarns, pellets, weaves (or textiles (e.g. for clothing)), nets, tents, and curtains incorporating (e.g. coated or impregnated with) 4-trifluoromethylnicotinamide mixture of Table 1 or Table 2, which can be used to protect against mosquito bites. In particular, it is well known that humans can be protected in their sleep from mosquito bites by insecticidally coated sleeping nets. Coated or impregnated weaves of the invention can also be used as curtains in front of windows, doors open eaves, or ventilation openings, in order to control mosquito entering dwellings.

The use of at least one 4-trifluoromethylnicotinamide mixture of Table 1 or Table 2 in a non-living material or substrate of the present invention (e.g. nets and weaves) achieves at least one of the following objects:
- good insecticidal effect
- fast-acting insecticidal efficacy
- long-lasting insecticidal efficacy
- uniform release of active ingredient
- long durability (including resisting multiple washings over an extended period)
- simple production
- safe to the user

The nets and weaves (or textiles) of the invention that incorporate (e.g. are coated or impregnated with) at least one 4-trifluoromethylnicotinamide mixture of Table 1 or Table 2, are made up of a variety of natural and synthetic fibres, also as textile blends in woven or non-woven form, as knit goods or fibres. Natural fibres are for example cotton, raffia, jute, flax, sisal, hessian, wool, silk or hemp. Synthetic fibres may be made of polyamides, polyesters, polyacrylonitriles, polyolefines, for example polypropylene or polyethylene, Teflon, and mixtures of fibres, for example mixtures of synthetic and natural fibres. Polyamides, polyolefins and polyesters are preferred as fibre material. Polyester, such a polyethylene terephthalate, polyethylene and polypropylene are especially preferred. Most preferred are nettings made from polyester, polyethylene and/or polypropylene.

The art discloses methods suitable for incorporating (by way of coating) a compound onto nets and weaves (see for example, WO2003/034823, WO 2008/122287, WO 01/37662, US2009036547, WO 2007/036710), from dipping or submerging them into a formulation of the insecticide or by spraying the formulation onto their surfaces. After treating the nets and weaves of the invention, they may be dried simply at ambient temperatures (see also below for more background). Such methods are also suitable for incorporating (by way of coating) at least one 4-trifluoromethylnicotinamide mixture of Table 1 or Table 2.

Also disclosed in the art are methods suitable for incorporating (by way of impregnating) a compound within the net or weave by making polymer material in the presence of the 4-trifluoromethylnicotinamide mixture and, optionally, other active compounds, which is then extruded into fibres, threads or yarns, for making the nets and weaves (see for example, WO08004711, WO2009/121580, WO2011/128380, WO2011/141260, WO2010/118743). Such nets and weaves having available at the surface of the net and weave an effective amount of at least one 4-trifluoromethylnicotinamide mixture of Table 1 or Table 2 so as to control mosquito bites. Generally the 4-trifluoromethylnicotinamide mixture of Table 1 or Table 2 compound is mixed with the molten polymer. Such methods are also suitable for incorporating (by way of impregnating) at least one 4-trifluoromethylnicotinamide mixture of Table 1 or Table 2.

The term "incorporating" or "incorporated" in context of the invention, additives and other insecticides is meant that the substrate or non-living material comprises or contains the respectively defined 4-trifluoromethylnicotinamide mixture, additive and/or insecticide, such as by coating or impregnation.

Preferably the substrate of the present invention is a net, which net is preferably a long lasting net, incorporated with at least one 4-trifluoromethylnicotinamide mixture of Table 1 or Table 2 by way of coating the net with a composition comprising such pyridine compounds, or by way of making a polymeric material in the presence of such pyridine compounds and then processing the resultant polymeric material into an inventive net.

In accordance with the invention, when at least one 4-trifluoromethylnicotinamide mixture of Table 1 or Table 2 is used within the polymer, then during use of the resulting net or weave made from the polymer, such pyridine compound is released to the surface of the net to control against mosquito bites - such control is sustained at adequate level and for adequate amount of time.

Examples of suitable polymers are polyamides, polyesters, polyacrylonitriles, polyolefines, such as polyethylene compositions that can be made from different polyethylene polymers; these may be LDPE, LLDPE, MDPE and HDPE. LLDPE (Linear low-density polyethylene) is a substantially linear polymer (polyethylene), with significant numbers of short branches, commonly made by copolymerization of ethylene with longer-chain olefins. MDPE is medium-density polyethylene is a substantially linear polymer of polyethylene with shorter chain length than HDPE. HOPE (High-Density PolyEthylene) or PolyEthylene High-Density (PEHD) is a polyethylene thermoplast. HOPE has little branching, giving it stronger intermolecular forces and tensile strength than lower- density polyethylene. It is also harder and more opaque and can withstand somewhat higher temperatures (120°C /248°F for short periods, 110°C /230°F continuously). HOPE yarns are stronger than LDPE mixed polyethylene yarns. LLDPE differs structurally from conventional low- density polyethylene (LDPE) because of the absence of long chain branching. These polyethylene compositions (HDPE, LDPE, LLDPE and mixture thereof) are generally used for preparing yarns and polyethylene based textile products. Methods for incorporating an insecticide compound into the polymer without weakening its resulting properties are known in the art, such as using mixtures of HDPE and LDPE. Such methods can also be used to incorporate a 4-trifluoromethylnicotinamide mixture of Table 1 or Table 2 into a polymer.

In one embodiment, 4-trifluoromethylnicotinamide and at least one compound of Table 1 or Table 2 is incorporated into a polymer masterbatch by using the foregoing methods to encapsulate such compound during a heat process into a carrier resin such as one of the suitable polmers mentioned above. The masterbatch mixture is is then cooled and typically cut into a granular shape. These may include compound masterbatch granules (those granules containing two or more active materials) and bulk-blend granules (two or more masterbatch granules of individual actives mixed together to form a compound masterbatch, including those having granules of a similar size. This includes, for example, masterbatch granules containing 4-trifluoromethylnicotinamide mixed with other masterbatch granules containing at least one compound of Table 1 or Table 2). The masterbatch composition thus prepared is useful for incorporation in to a polymer matrix and facilitates the impartation of insect-resistant properties to raw polymers during the plastics manufacturing process. These insect-resistant materials may then be further extruded to prepare various fabrics or materials which can be formed into nets or weaves having long lasting insecticidal resistance.

Examples of spray products of the present invention are indoor residual sprays or space sprays comprising a 4-trifluoromethylnicotinamide in mixture with a compound of Table 1 or Table 2. Indoor Residual Spraying (IRS) is the technique of applying a residual deposit of an insecticide onto indoor surfaces where vectors rest, such as on walls and ceilings. The primary goal of indoor residual spraying is to reduce the lifespan of the mosquito vectors and thereby reduce or interrupt disease transmission. The secondary impact is to reduce the density of mosquitoes within the treatment area. IRS is a recognised, proven and cost-effective intervention method for the control of malaria and it is also used in the management of Leishmaniasis and Chagas disease. Many malaria mosquito vectors are endophilic, resting inside houses after taking a blood meal. These mosquitoes are particularly susceptible to control through indoor residual spraying (IRS) comprising a 4-trifluoromethylnicotinamide mixture of Table 1 or Table 2. As its name implies, IRS involves coating the walls and other surfaces of a house with a residual insecticide. In one embodiment, the 4-trifluoromethylnicotinamide compound and its mixtures will knockdown mosquitoes that come in contact with these surfaces. IRS does not directly prevent people from being bitten by mosquitoes. Rather, it usually controls mosquitoes after they have blood fed, if they come to rest on the sprayed surface. IRS thus prevents transmission of infection to other persons. To be effective, IRS must be applied to a very high proportion of households in an area (usually greater than 70 percent). Although the community plays a passive role in IRS programs, cooperation with an IRS effort is a key to its success. Community participation for IRS often consists of cooperating with the spray teams by removing food and covering surfaces prior to spraying and refraining from covering the treated surfaces with new paint or plaster. However, community or individual householder opposition to IRS due to the smell, mess, possible chemical exposure, or sheer bother has become a serious problem in some areas. Therefore, sprays in accordance with the invention having good residual efficacy and acceptable odour are particularly suited as a component of integrated mosquito vector management or control solutions.

In contrast to IRS, which requires that the active 4-trifluoromethylnicotinamide mixtures of Table 1 or Table 2 is bound to surfaces of dwellings, such as walls, ceiling as with a paint, for example, space spray products of the invention rely on the production of a large number of small insecticidal droplets intended to be distributed through a volume of air over a given period of time. When these droplets impact on a target mosquito, they deliver a knockdown effective dose of the 4-trifluoromethylnicotinamide mixture effective to control the mosquito. The traditional methods for generating a space-spray include thermal fogging (whereby a dense cloud of the 4-trifluoromethylnicotinamide mixture in droplets is produced giving the appearance of a thick fog) and Ultra Low Volume (ULV), whereby droplets are produced by a cold, mechanical aerosol-generating machine. Ready-to-use aerosols such as aerosol cans may also be mentioned.

Since large areas can be treated at any one time this method is a very effective way to rapidly reduce the population of flying mosquitoes in a specific area. Since there is very limited residual activity from the application it must be repeated at intervals of 5-7 days in order to be fully effective. This method can be particularly effective in epidemic situations where rapid reduction in mosquito numbers is required. As such, it can be used in urban dengue control campaigns.

Effective space-spraying is generally dependent upon the following specific principles:
- Target insects are usually flying or otherwise moving through the spray cloud (or are sometimes impacted whilst resting on exposed surfaces). The efficiency of contact between the spray droplets and target insects is therefore crucial. This is achieved by ensuring that spray droplets remain airborne for the optimum period of time and that they contain the right dose of insecticide. These two issues are largely addressed through optimizing the droplet size.
- If droplets are too big they drop to the ground too quickly and don't penetrate vegetation or other obstacles encountered during application (limiting the effective area of application). If one of these big droplets impacts an individual insect then it is also 'overkill' since a high dose will be delivered per individual insect.
- If droplets are too small then they may either not deposit on a target insect (no impaction) due to aerodynamics or they can be carried upwards into the atmosphere by convection currents.
- The optimum size of droplets for space-spray application are droplets with a Volume Median Diameter (VMD) of 10-25 microns.

The compositions of the present invention comprising 4-trifluoromethylnicotinamide mixtures of Table 1 or Table 2 may be made available in a spray product as an aerosol-based application, including aerosolized foam applications. Pressurised cans are the typical vehicle for the formation of aerosols. An aerosol propellant that is compatible with the particular 4-trifluoromethylnicotinamide mixture is used. Preferably, a liquefied-gas type propellant is used. Suitable propellants include compressed air, carbon dioxide, butane and nitrogen. The concentration of the propellant in the active compound composition is from about 5 percent to about 40 percent by weight of the 4-trifluoromethylnicotinamide mixture composition, preferably from about 15 percent to about 30 percent by weight of such 4-trifluoromethylnicotinamide containing mixture composition.

In one embodiment, the such 4-trifluoromethylnicotinamide containing mixture formulations of the invention can also include one or more foaming agents. Foaming agents that can be used include sodium laureth sulphate, cocamide DEA, and cocamidopropyl betaine. Preferably, the sodium laureth sulphate, cocamide DEA and cocamidopropyl are used in combination. The concentration of the foaming agent(s) in the acitive compound composition is from about 10 percent to about 25 percent by weight, more preferably 15 percent to 20 percent by weight of the composition.

When such mixture formulations are used in an aerosol application not containing foaming agents, the active compound compositions of the present invention can be used without the need for mixing directly prior to use. However, aerosol formulations containing the foaming agents do require mixing (i.e. shaking) immediately prior to use. In addition, if the formulations containing foaming agents are used for an extended time, they may require additional mixing at periodic intervals during use.

A dwelling area may also be treated with an active compound composition of the present invention by using a burning formulation, such as a candle, a smoke coil or a piece of incense containing the composition. For example, composition may be comprised in household products such as "heated" air fresheners in which insecticidal compositions are released upon heating, for example, electrically, or by burning.

The 4-trifluoromethylnicotinamide mixture compositions of the present invention of Table 1 or Table 2 may be made available in a spray product as an aerosol, a mosquito coil, and/or a vaporiser or fogger.

The combined a.i. concentration of the a 4-trifluoromethylnicotinamide mixture of Table 1 or Table 2 in the polymeric material, fibre, yarn, weave, net, or substrate, each of the invention, can be varied within a relatively wide concentration range from, for example 0.05 to 15 percent by weight, preferably 0.2 to 10 percent by weight, more preferably 0.4 to 8 percent by weight, especially 0.5 to 5, such as 1 to 3, percent by weight.

The percentages mentioned above are based on dry weight of the net or substrate or non-living material.

Similarly, the a.i. concentration of the 4-trifluoromethylnicotinamide mixture of Table 1 or Table 2 in the composition of the invention (whether for treating surfaces or for coating a fibre, yarn, net, weave) can be varied within a relatively wide concentration range from, for example 0.1 to 70 percent by weight, such as 0.5 to 50 percent by weight, preferably 1 to 40 percent by weight, more preferably 5 to 30 percent by weight, especially 10 to 20 percent by weight.

The concentration shall be chosen according to the field of application such that the requirements concerning knockdown efficacy, durability and toxicity are met. Adapting the properties of the material can also be accomplished and so custom-tailored textile fabrics are obtainable in this way.

The 4-trifluoromethylnicotinamide mixtures of Table 1 or Table 2 (Al) when used in the IRS methods of the invention is present on a surface of a dwelling at a coverage of from 0.01 to 2 grams of Al per m2, preferably from 0.05 to 1 grams of Al per m2, especially from 0.1 to 0.7 grams of Al per m2.

Accordingly an effective amount of a 4-trifluoromethylnicotinamide mixtures of Table 1 or Table 2 can depend on the specific use pattern, the mosquito against which control is most desired and the environment in which 4-trifluoromethylnicotinamide mixtures of Table 1 or Table 2 will be used.

Therefore, an effective amount of a 4-trifluoromethylnicotinamide mixtures of Table 1 or Table 2 is sufficient that control of a mosquito is achieved; in case of:
- use as IRS formulation, the effective amount is such that coverage of the Al on the surface is from 0.01 to 2 grams of Al per m2, preferably from 0.05 to 1 grams of Al per m2, especially from 0.1 to 0.7 grams of Al per m2;
- use incorporatated within a net or substrate, the effective amount is 0.05 to 15 percent by weight, preferably 0.2 to 10 percent by weight, more preferably 0.4 to 8 percent by weight, especially 0.5 to 5, such as 1 to 3, percent by weight.

Generally the 4-trifluoromethylnicotinamide mixture with a compound of Table 1 or Table 2 when used in certain products of the invention is continuously distributed in a thread, yarn, net or weave, but can also be partially or discontinuously distributed in a thread, yarn, net or weave. For example, a mixture of the invention within a net or cloth may contain certain parts which are coated or which is made-up of fibre impregnated with the mixture, and certain other parts which are not; alternatively some of the fibres making up the net are impregnated, or are coated, with the 4-trifluoromethylnicotinamide , and some of the other fibres not, but where some of these other fibres are impregnated, or are coated, with at least one compound of Table 1 or Table 2.

Nets of the invention impregnated, or coated, with a 4-trifluoromethylnicotinamide mixture of Table 1 or Table 2 can satisfy the criteria of the WHOPES directive (see "Guidelines for laboratory and field testing of long-lasting insecticidal mosquito nets", 2005, http://www.who.int/whopes/guidelines/en/) for insecticide-containing long-lasting mosquito nets up to 20 washes only, which means that such nets should not lose their biological activity after just 20 wash cycles or so.

In an embodiment, a net of the invention impregnated, or coated, with 4-trifluoromethylnicotinamide mixture of Table 1 or Table 2 can have biological activity in accordance with WHOPES guidelines of a knockdown after 60 minutes of between 95 percent and 100 percent or a mortality after 24 hours of between 80 percent and 100 percent after at least 20, such as 25, preferably at least 30 and even more preferably at least 35 washes.

The "WHOPES directive" is to be understood as meaning the directive "Guidelines for laboratory and field testing of long-lasting insecticidal mosquito nets", 2005). This directive is retrievable at the following interact address: http://www.who.int/whopes/guidelines/en/.

When a net is "impregnated with" a 4-trifluoromethylnicotinamide mixture of Table 1 or Table 2 to prepare a net of the present invention, the fibres making up the net are made by melting a polymer, a 4-trifluoromethylnicotinamide mixture of Table 1 or Table 2 (in the various alternative manners described above) and optionally other compounds, such as other insecticides, additives, stabilisers. When a net is impregnated with such a 4-trifluoromethylnicotinamide mixture, then the net of the invention contains synthetic fibres; in contrast, a net of the invention coated with such a 4-trifluoromethylnicotinamide mixture contains synthetic fibres and/or natural fibres.

The polymeric materials useful in the compositions of the invention incorporating at least one 4-trifluoromethylnicotinamide mixture of Table 1 or Table 2 can be produced by mixing such a 4-trifluoromethylnicotinamide mixture with the polymer in the liquid phase, and optionally other additives (such as binders and/or synergists), and other insecticidal compounds.

Methods of making suitable polymeric materials and then processing it are described in the art - see for example, WO09121580, WO2011/141260.

For example, nets based on a 4-trifluoromethylnicotinamide mixture-containing polymeric material are produced by the following steps:
a) melting the polymer to be used and one or more insecticidally active ingredients together or separately at temperatures between 120 and 250°C,
b) forming the melt of step a) into spun threads and cooling,
c) optionally leading the spun threads formed in step b) through a drawing system and drawing and then optionally setting out the threads,
d) knitting the spun threads to form a net,
e) subjecting the net to a heat-setting operation wherein the temperature for the heat-setting operation is chosen to be 20°C below the melting temperature of the polymer to be used.

The heat setting in step e) of the production of the nets is preceded by a washing step. Water and a detergent is preferably used for this. The heat setting is preferably carried out in a dry atmosphere.

Although the manufacture of the nets incorporated with the insecticide compound can occur in a single location, it is also envisaged that the different steps can take place in different locations. So a composition comprising a 4-trifluoromethylnicotinamide mixture may be made which can then be processed into a polymer. Accordiingly, the present invention also provides a composition comprising a 4-trifluoromethylnicotinamide mixture of Table 1 or Table 2 in a concentrated form, which composition may also contain additives (such as binders and/or synergists), and other insecticidal compound(s) (which composition had been prepared explicitly for making a polymer material impregnated with the mixture of Table 1 or Table 2 (such a composition is often referred to as a "masterbatch")). The amount of the mixture of Table 1 or Table 2 in the masterbatch would depend on the circumstances, but in general can be 10 to 95 percent by weight, such as 20 to 90 percent by weight, preferably 30 to 85 percent by weight, more preferably 35 to 80 percent by weight, especially 40 to 75 percent by weight. Suitable masterbatches can also include bulk-blends (i.e., where two or more masterbatch compositions of individual insecticides are mixed together to result in a 4-trifluoromethylnicotinamide mixture of Table 1 or Table 2).

Also made available in the present invention are compositions or formulations for coating walls, floors and ceilings inside of buildings and for coating a substrate or non-living material, which comprise a mixture of Table 1 or Table 2. The inventive compositions can be prepared using known techniques for the purpose in mind, which could contain a binder to facilitate the binding of the compound to the surface or other substrate. Agents useful for binding are known in the art and tend to be polymeric in form. The type of binder suitable for composition to be applied to a wall surface having particular porosities, binding characteristics would be different to a fibre, yarn, weave or net - a skilled person, based on known teachings, would select a suitable binder.

Typical binders are poly vinyl alcohol, modified starch, poly vinyl acrylate, polyacrylic, polyvinyl acetate co polymer, polyurethane, and modified vegetable oils. Suitable binders can include latex dispersions derived from a wide variety of polymers and co-polymers and combinations thereof. Suitable latexes for use as binders in the inventive compositions comprise polymers and copolymers of styrene, alkyl styrenes, isoprene, butadiene, acrylonitrile lower alkyl acrylates, vinyl chloride, vinylidene chloride, vinyl esters of lower carboxylic acids and alpha, beta-ethylenically unsaturated carboxylic acids, including polymers containing three or more different monomer species copolymerized therein, as well as post-dispersed suspensions of silicones or polyurethanes. Also suitable may be a polytetrafluoroethylene (PTFE) polymer for binding the active ingredient to other surfaces.

The formulation according to the present invention comprises at least one mixture listed in Table 1 or Table 2 (or a pesticide (A)), and a carrier, such as water (C), and optionally a polymeric binder (B) and further components (D).

The polymeric binder binds the at least one mixture listed in Table 1 or Table 2 to the surface of the non-living material and ensures a long-term effect. Using the binder reduces the elimination of the pyridine pesticide out of the non-living material due to environmental effects such as rain or due to human impact on the non-living material such as washing and/or cleaning it. The further components can be an additional insecticide compound, a synergist, a UV stabiliser.

The inventive mixture compositions can be in a number of different forms or formulation types, such as suspensions, capsules suspensions, concentrates, tank mixtures, co-packs, and a person skilled in the art can prepare the relevant composition based on the properties of the particular 4-trifluoromethylnicotinamide mixture, its uses and also application type.

For example, the 4-trifluoromethylnicotinamide mixtures used in the methods, embodiments and other aspects of the present invention may be encapsulated in whole or in part within the formulation (meaning that one compound of the mixture can be encapsulated and the other not, or both encapsulated separately and then mixed, or encapsulated together, etc., depending on the formulation and biological properties that are desired for the final product, target pest and use pattern). A encapsulated compound can provide improved wash-fastness and also longer period of activity. The formulation can be organic based or aqueous based, preferably aqueous based.

Microencapsulated 4-trifluoromethylnicotinamide mixtures suitable for use in the compositions and methods according to the invention are prepared with any suitable technique known in the art. For example, various processes for microencapsulating material have been previously developed. These processes can be divided into three categories-physical methods, phase separation and interfacial reaction. In the physical methods category, microcapsule wall material and core particles are physically brought together and the wall material flows around the core particle to form the microcapsule. In the phase separation category, microcapsules are formed by emulsifying or dispersing the core material in an immiscible continuous phase in which the wall material is dissolved and caused to physically separate from the continuous phase, such as by coacervation, and deposit around the core particles. In the interfacial reaction category, microcapsules are formed by emulsifying or dispersing the core material in an immiscible continuous phase and then an interfacial polymerization reaction is caused to take place at the surface of the core particles. The concentration of the pyridine compound present in the microcapsules can vary from 0.1 to 60% by weight of the microcapsule.

The formulation used in the 4-trifluoromethylnicotinamide mixtures, compositions, methods, embodiments and other aspects according to the invention may be formed by mixing all ingredients together with water optionally using suitable mixing and/or dispersing aggregates. In general, such a formulation is formed at a temperature of from 10 to 70°C, preferably 15 to 50 °C, more preferably 20 to 40°C

In general, it is possible to use a mixture of Table 1 or Table 2 (as pesticide) (A), solid polymer (B) and optionally additional additives (D) and to disperse them in the aqueous component (C)
If a binder is present in a composition of the present invention, it is preferred to use dispersions of the polymeric binder (B) in water as well as aqueous formulations of the pyridine pesticide (A) in water which have been separately prepared before. Such separate formulations may contain additional additives for stabilizing (A) and/or (B) in the respective formulations and are commercially available. In a second process step, such raw formulations and optionally additional water (component (C)) are added.

Also combinations are possible, i.e. using a pre-formed dispersion of (A) and/or (B) and mixing it with solid (A) and/or (B).

A dispersion of the polymeric binder (B) may be a pre-manufactured dispersion already made by a chemicals manufacturer.

However, it is also within the scope of the present invention to use "hand-made" dispersions, i.e. dispersions made in small-scale by an end-user. Such dispersions may be made by providing a mixture of about 20 percent of the binder (B) in water, heating the mixture to temperature of 90 to 100°C and intensively stirring the mixture for several hours.

It is possible to manufacture the formulation as a final product so that it can be readily used by the end-user for the process according to the present invention.

However, it is of course also possible to manufacture a concentrate, which may be diluted by the end-user with additional water (C) to the desired concentration for use.

In an embodiment, a composition suitable for IRS application or a coating formulation containing a mixture of Table 1 or Table 2 contains the active ingredient and a carrier, such as water, and may also one or more co-formulants selected from a dispersant, a wetter, an anti-freeze, a thickener, a preservative, an emulsifier and a binder or sticker.

The mixture of Table 1 or Table 2 is generally milled to a desired particle size, such as the particle size distribution d(0.5) is generally from 3 to 20, preferably 5 to 15, especially 7 to 12, µm.

Furthermore, it may be possible to ship the formulation to the end-user as a kit comprising at least
- a first component comprising at least one mixture listed in Table 1 or Table 2 (A); and
- a second component comprising at least one polymeric binder (B).
- Further additives (D) may be a third separate component of the kit, or may be already mixed with components (A) and/or (B).

The end-user may prepare the formulation for use by just adding water (C) to the components of the kit and mixing.

The components of the kit may also be formulations in water. Of course it is possible to combine an aqueous formulation of one of the components with a dry formulation of the other component(s).

As an example, the kit can comprise
- one formulation of a mixture listed in Table 1 or Table 2 (A) and optionally water (C); and
- a second, separate formulation of at least one polymeric binder (B), water as component (C) and optionally components (D).

Accordingly, in a further aspect the present invention provides a kit for treating a fibre, yarn, net and weave by coating wash resistant insecticidal properties thereto comprising: a first sachet comprising a pre-measured amount of at least one mixture listed in Table 1 or Table 2, and a second sachet comprising a pre-measured amount of at least one polymeric binder. The resulting treated fibre, yarn, net and weave has imparted thereto the insecticidal properties needed for vector control, such as to control vector-carrying mosquitoes.

The concentrations of the components (A), (B), (C) and optionally (D) will be selected by the skilled artisan depending of the technique to be used for coating/ treating.

In general, the amount of mixture (A) may be up to 50, preferably 5 to 50, such as 10 to 40, especially 15 to 30, percent by weight, based on weight of the composition.

The amount of polymeric binder (B) may be in the range of 0.01 to 30, preferably 0.5 to 15, more preferably 1 to 10, especially 1 to 5, percent by weight, based on weight of the composition.

If present, in general the amount of additional components (D) is from 0.1 to 20, preferably 0.5 to 15, percent by weight, based on weight of the composition. If present, suitable amounts of pigments and/or dyestuffs are in general 0.01 to 5, preferably 0.1 to 3, more preferably 0.2 to 2, percent by weight, based on weight of the composition.

A typical formulation ready for use comprises 0.1 to 40, preferably 1 to 30, percent of components (A), (B), and optionally (D), the residual amount being water (C).

A typical concentration of a concentrate to be diluted by the end-user may comprise 5 to 70, preferably 10 to 60, percent of components (A), (B), and optionally (D), the residual amount being water (C).

The formulation of a mixture of the present invention may be applied to polymeric material before their formation into the required products, e.g. while still a yarn or in sheet form, or after formation of the relevant products.

For the case of nets and/or weaves, a process for coating nets and/or weaves at least comprising the following steps:
a) treating the nets and/or weaves with the aqueous formulation according to the invention by any of the procedural steps selected from the group of
   (a1) passing the material through the formulation; or
   (a2) contacting the material with a roller that is partly or fully dipped into the formulation and drawing the formulation to the side of the material in contact with the roller, or
   (a3) submerging the material into the formulation; or
   (a4) spraying the formulation onto the material; or
   (a5) brushing the formulation onto or into the material; or
   (a6) applying the formulation as a foam; or
   (a7) coating the formulation onto material.
b) optionally removing surplus formulation by squeezing the material between rollers or by means of a doctor blade; and
c) drying the material.

In case the raw materials containing residues of preceding production processes, e.g. sizes, spin finishes, other auxiliaries and/or impurities, it may be beneficial to perform a washing step before the coating.

Specifically, the following details are important for the steps a), b), and c).

### Step a1)

The formulation is applied by passing the material through the aqueous formulation. Said step is known by a person skilled in the art as padding. In a preferred embodiment the material is completely submerged in the aqueous formulation either in a trough containing the liquor or the material is passed through the formulation which is held between two horizontally oriented rollers. In accordance with the invention, the material may either be passed through the formulation or the formulation may be passed through the material. The amount of uptake of the formulation will be influenced by the stability of concentrated baths, the need for level distribution, the density of material and the wish to save energy costs for drying and curing steps. Usual liquor-uptakes may be 40 to 150 percent on the weight of material. A person skilled in the art is familiar with determining the optimum value. Step a1) is preferred for coating open-width material which is later tailored into nets.

For small-scale production or re-coating of non-treated nets, use of a simple hand-held roller may be sufficient.

### Step a2)

It is further possible to apply the aqueous formulation on the material by a roller that is partly dipped into the dispersion thus applying the dispersion to the side of the material in contact with the roller (kiss-rolling). By this method it is possible to coat only one side of the material which is advantageous if e.g. direct contact of the human skin with insecticide-treated material is to be avoided.

Coating of the material in step a1), a2) or a3) is typically carried out at temperatures from 10 to 70 degrees centigrade, preferably 15 to 50°C, more preferably 20 to 40°C

### Step a4)

The spray may be applied in continuous processes or in batch-wise processes in suitable textile machines equipped with a spraying device, e.g. in open-pocket garment washer/extractors. Such equipment is especially suitable for impregnating ready-made nets.

### Step a6)

A foam comprises less water than the dispersion mentioned above. The drying process may therefore be very short. The treatment may be performed by injecting gas or blends of gas (e.g., air) into it. The addition of surfactants, preferably with film-forming properties, may be required. Suitable surfactants and the required technical equipment are known to persons skilled in the art.

### Step a7)

A coating process may preferably carried out in a doctor-blade process. The process conditions are known to a person skilled in the art.

### Step b)

The surplus emulsion is usually removed by squeezing the material, preferably by passing the material through rollers as known in the art thus achieving a defined liquor uptake. The squeezed-off liquor may be re-used. Alternatively, the surplus aqueous emulsion or aqueous dispersion may be removed by centrifuging or vacuum suction.

### Step c)

Drying may be performed at ambient temperatures. In particular, such a passive drying may be carried out in hot-dry climate. Of course, the drying process may be accelerated applying elevated temperatures. An active drying process would normally be performed during high scale processing. The drying is in general carried out temperatures below 200°C. Preferred temperatures are from 30 to 170°C , more preferably at room temperature. The temperature choice is determined by the thermal stability of the insecticide in the formulation and the thermal stability of the non-living material impregnated.

For the method according to the invention aqueous formulation comprising at least one pigment and/or at least one dyestuff may be used so that the material is not only coated with the mosquitocidal or insecticidal 4-trifluoromethylnicotinamide compound mixture but in addition also coloured at the same time.

In a further aspect, the present invention provides a method for treating a fibre, yarn, net and weave by coating wash resistant insecticidal properties thereto comprising (i) preparing a treatment composition, which comprises at least one mixture listed in Table 1, (ii) treating said fibre, yarn, net and weave and (iii) drying the resulting treated a fibre, yarn, net and weave.

The polymeric binder (B) can be dispersed in an aqueous formulation and comprises one or more fluorinated acrylic copolymers useful in the water and oil resistant formulations includes copolymer prepared by the polymerization of a perfluoroalkyl acrylate monomer and a comonomer, especially an acrylate monomer. The binder may also be fluorocarbon resins (as described in WO 2006/128870).

Only water is used as solvent for the formulation. However, trace amounts of organic solvents miscible with water may be present. Examples of solvents comprise water-miscible alcohols, e.g. monoalcohols such as methanol, ethanol or propanol, higher alcohols such as ethylene glycol or polyether polyols and ether alcohols such as butyl glycol or methoxypropanol. Preferably the content of an organic solvent is no more than 5 percent by weight (based on component (C), more preferably no more than 1 percent by weight (based on component (C), in particular no more than 0.1 percent by weight, based on component (C).

Depending on the intended use of the non-living material to be treated with the 4-(trifluoromethyl)pyridine formulation according to the present invention may further comprise one or more components or additives (D) selected from preservatives, detergents, fillers, impact modifiers, anti-fogging agents, blowing agents, clarifiers, nucleating agents, coupling agents, fixative agents, cross-linking agents, conductivity-enhancing agents (antistats), stabilizers such as antioxidants, carbon and oxygen radical scavengers and peroxide decomposing agents and the like, flame retardants, mould release agents, agents having UV protecting properties, spreading agents, antiblocking agents, anti-migrating agents, foam-forming agents, anti-soiling agents, thickeners, further biocides, wetting agents, plasticizers and film-forming agents, adhesive or anti-adhesive agents, optical brightening (fluorescent whitening) agents, pigments and dyestuffs.

A typical amount of the polymeric binder (B) is from 0.01 to 10 percent by weight (dry weight) of the (dry) weight of the material. As a general guideline, the weight ratio between 4-trifluoromethylnicotinamide mixture and binder (B) should approximately be constant with a value depending on the biological activity and migratory ability of the A.I. in the 4-trifluoromethylnicotinamide mixture, i.e. the higher the amount of such compound the higher also the amount of binder (B). Preferred amounts of binder (B) are from 0.1 to 5 percent by weight, more preferably 0.2 to 3 percent by weight of the (dry) weight of the material.

The coated material can comprise at least one pigment and/or at least one dyestuff. The amount of the at least one pigment and/or dyestuff is in general from 0.05 to 10 percent by weight, preferably 0.1 to 5 percent by weight, more preferably 0.2 to 3.5 percent by weight of the (dry) weight of the material.

The method of coating or treating the non-living material is not limited to a specific technology. Coating may be performed by dipping or submerging the non-living substrate into the formulation or by spraying the formulation onto the surface of the non-living material. After treating the treated non-living substrate may be dried simply at ambient temperatures.

Accordingly, no sophisticated technology is necessary for the coating, and therefore the coating process may be carried out by the end-user itself in at low-scale.

For instance, a typical end-user may coat/treat a net itself, e.g. within its household, using the formulation according to the present invention. For this purpose, it is in particular advantageous to use a kit as herein defined.

In an embodiment, the present invention provides a polymer, a fibre, a thread, a yarn, a net or weave comprising one or more mixtures (listed in Table 1 or Table 2), where also incorporated can be one or more other customary materials used to make such a polymer, and the polymer, a fibre, a thread, a yarn, a net or weave optionally can further incorporate one or more other insecticides and/or synergists.

In an embodiment, the present invention provides a net or weave incorporated with one or more 4-trifluoromethylnicotinamide mixtures (such as those listed in Table 1 or Table 2), which optionally further incorporates one or more other insecticides and/ or synergists.

As described in the art, 4-trifluoromethylnicotinamide mixtures useful in the methods and other aspects of the present invention can be used alone or in combination with another insecticide, synergist, insect repellent, chemosterilant, flame retardant, UV protector/ absorber, and/or additives for controlling release characteristics.

When used in accordance with the invention, a mixture of Table 1 or Table 2 may be used alone to control a fly or mosquito or used in combination with one or other known insecticides and/or one or more additives (such as synergists) - in polymers for making non-living substrates, such as nets and weaves, for formulations for treating non-living substrates, such as nets and weaves, in IRS products and space-spraying products.

In an embodiment, the present invention provides a composition (useful for coating a polymeric material or a product therefrom, or a useful as a spray product) comprising one or more 4-trifluoromethylnicotinamide mixtures selected from the mixtures of Table 1 or Table 2, which optionally further comprises one or more other insecticide and/or synergists and one or more other additives.

Examples of synergists are piperonylbutoxide (PBO), sebacic esters, fatty acids, fatty acid esters, vegetable oils, esters of vegetable oils, alcohol alkoxylates and antioxidants.

Suitable sebacic esters are for example dimethyl sebacate, diethyl sebacate, dibutyl sebacate, dibenzyl sebacate, bis(N-succinimidyl)sebacate, bis(2-ethylhexyl)sebacate, bis(1-octyloxy-2,2,6,6-tetramethyl-4-piperidyl)sebacate, bis(2,2,6,6-tetramethyl-4-piperidyl)sebacate and bis(1,2,2,6,6-pentamethyl-4-piperidinyl)sebacate (BLS292).

Suitable fatty acids are (preferably mono- or polyunsaturated) fatty acids having a chain length of 12 to 24 carbon atoms, for example palmitoleic acid, oleic acid, elaidic acid, vaccenic acid, icosenic acid, cetoleic acid, erucic acid, nervonic acid, linoleic acid, alpha-linolenic acid, gamma-linolenic acid, arachidonic acid, timnodonic acid, clupanodonic acid and cervonic acid. Particular preference is given to oleic acid, linoleic acid, alpha-linolenic acid and gamma-linolenic acid.

Suitable fatty acid esters are preferably methyl or ethyl esters of the above-recited fatty acids. Methyl esters are particularly preferred. Fatty acids and their esters can each also be present in mixtures.

Useful vegetable oils include all plant-derivable oils customarily usable in agrochemical compositions. As examples there may be mentioned sunflower oil, rapeseed oil, olive oil, castor oil, colza oil, maize kernel oil, cottonseed oil and soybean oil. Rapeseed oil is preferred.

Suitable esters of vegetable oils are methyl or ethyl esters of the above-recited oils. Methyl esters are preferred.

Antioxidants useful as additives include for example butylhydroxytoluene, butylhydroxyanisole and L-ascorbic acid.

Plant essential oils may also be used in an indoor residual spray compositions; examples are those selected from citronella, peppermint oil, d-limonene and abies sibirica. These plant essential oil materials are known and used for other uses and can be prepared by a skilled artisan by employing known methods and also are available commercially.

In another embodiment, in the practice of the methods and other aspects of the invention, components of the mixtures of Table 1 are applied either simultaneously or sequentially. In particular, it has been found that mosquitoes which pick-up a 4-trifluoromethylnicotinamide compound are knocked down or debilitated and thereby become more prone to being controlled by the combination of such 4-trifluoromethylnicotinamide with other suitable insectides as shown in the mixtures of Table 1 or Table 2.

In a further aspect, the present invention provides a method for protecting humans and mammals against blood feeding dipteran, triatominae or cimicidae insects (incl. mosquitoes), the method comprising applying to such blood feeding insect or to a locus of potential or known interaction between the human or mammal and such insect, a vector control solution comprising a knockdown or blood feed inhibiting effective amount of a simultaneously or sequentially applied mixture of a 4-trifluoromethylnicotinamide and a compound selected from the group consisting of those listed in Table 1 or Table 2.

Another aspect of the invention is a method for controlling the spread of a vector-borne disease, comprising: identifying a mosquito vector; and contacting the mosquito vector or its environment with a vector control solution comprising a knockdown or blood feeding inhibiting effective amount of a mixture selected from the group consisting of a 4-trifluoromethylnicotinamide mixture as defined in Table 1 or Table 2.

An aspect of the invention also includes a knockdown or blood feed inhibiting method which comprises contacting a mosquito or its environment with a a vector control solution comprising a knockdown or blood feed inhibiting effective amount of a mixture as defined in Table 1 or Table 2.

The present invention also provides a method, comprising: (i) identifying a locus of potential or known interaction between a target insect vector (such as a mosquito vector) and a mammal, including a human, susceptible to pathogenic disease infection when contacted by such vector and (ii) positioning a vector control solution at the locus, wherein the solution includes a knockdown or blood feed inhibiting effective amount of a mixture as defined in Table 1 or Table 2.

The present inventon through control of mosquitos would also be expected to control the many viruses carried by such vectors. As an example, control of the mosquitos of the genus *Aedes* by use of one or more of the defined mixtures of Table 1 or Table 2, as part of a vector control solution, may control the Zika infections. Examples of mosquitos reported to spread the Zika virus are the *Aedes* mosquitoes, such as *Aedes aegypti* and *Aedes albopictus.* Accordingly, in an aspect, the present invention provide a method of controlling Zika virus infection, wherein one or more of the defined mixtures of Table 1 is present in a knockdown or blood feed inhibiting effective amount in the vicinity of Aedes mosquitoes, such as *Aedes aegypti* and *Aedes albopictus.* In the vicinity of the mosquitoes is meant areas where mosquitos are likely to be present, such as in the environment in general, specifically in a room, or at the site of a mosquito biting an individual or mammal, for example, on the skin surface

In each of the methods according to present invention, the vector control solution is preferably one or more of a composition, a product and a treated article, each comprising a mixture as defined in Table 1 or Table 2.

A "fibre" as used in the present invention refers only to a fine, threadlike piece, generally made of natural material, such as cotton, or jute.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

In each aspect and embodiment of the invention, the terms "effective amount", "knockdown effective amount" and "blood feed inhibiting effective amount" in reference to the use of the mixture of Table 1 or Table 2 in such methods, products, compositions and integrated solutions, shall mean an amount of a mixture of Table 1 or Table 2 that can be picked-up by the target insect resulting in knockdown or blood feed inhibition in a manner which provides suitable control of such insect. In certain instances, the inventive mixtures are also lethal to the target insect within a period of time after application or contact.

The disclosure in the present application makes available each and every combination of embodiments disclosed herein.

The following Examples serve to illustrate the invention. They do not limit the invention.

### EXAMPLES

### BIOLOGY EXAMPLES:

### Examples Anopheles stephensi (Indian malaria mosquito)

The individual wells of twelve (12) well tissue culture plates were treated with 200 µl of an ethanol solution containing a test compound of Table 1 or Table 2 at a defined concentration and repeated with also 200 µl of an ethanol solution containing in addition 2 ppm TFNA-AM. Once the deposits were dry, five non-blood fed adult female *Anopheles stephensi* (between two to five day old) were added to each well, and sustained with a 10% sucrose solution in a cotton wool plug. Assessment of the knockdown after 1 hour, and mortality after 24 and 48 hours was carried out.

In case of multiple tests, the mean value is reported. Results are shown in the Table 3 below:

**Table 3**

| | | without TFNA-AM | | | with TFNA-AM | | |
|---|---|---|---|---|---|---|---|
| | | mortality % | | | mortality% | | |
| Compound | Rate ppm | Knock Down | 24 | 48 | Knock Down | 24 | 48 |
| TFNA-AM | 2 | - | - | - | 75.5 | 18.3 | 11.7 |
| Ethanol Control | - | 0.0 | 3.1 | 5.9 | - | - | - |
| | | | | | | | |
| Abamectin | 200 | 47 | 100 | 100 | 100 | 100 | 100 |
| | 20 | 7 | 53 | 87 | 100 | 93 | 100 |
| | 2 | 0 | 13 | 33 | 100 | 47 | 53 |
| | 0.2 | 0 | 13 | 20 | 100 | 20 | 27 |
| Amitraz | 200 | 0 | 0 | 0 | 100 | 100 | 100 |
| | 20 | 0 | 0 | 0 | 100 | 20 | 40 |
| | 2 | 0 | 0 | 0 | 100 | 20 | 0 |
| | 0.2 | 0 | 0 | 0 | 100 | 20 | 0 |
| Malathion | 20 | 40 | 100 | 100 | 100 | 100 | 100 |
| | 2 | 40 | 100 | 100 | 100 | 100 | 100 |
| | 0.2 | 20 | 0 | 0 | 100 | 0 | 0 |
| | 0.02 | 20 | 0 | 0 | 100 | 0 | 0 |
| Cypermethrin | 20 | 100 | 100 | 100 | 100 | 100 | 100 |
| | 2 | 100 | 100 | 100 | 100 | 100 | 100 |
| | 0.2 | 0 | 0 | 40 | 100 | 100 | 100 |
| | 0.02 | 0 | 0 | 20 | 100 | 80 | 20 |
| Bendiocarb | 20 | 100 | 100 | 100 | 100 | 100 | 100 |
| | 2 | 100 | 100 | 100 | 100 | 100 | 100 |
| | 0.2 | 20 | 60 | 60 | 100 | 100 | 100 |
| | 0.02 | 0 | 0 | 0 | 100 | 20 | 60 |
| Bifenthrin | 20 | 100 | 100 | 100 | 100 | 100 | 100 |
| | 2 | 100 | 100 | 100 | 100 | 100 | 100 |
| | 0.2 | 20 | 100 | 100 | 100 | 100 | 100 |
| | 0.02 | 20 | 20 | 60 | 100 | 100 | 100 |
| Broflanilide | 200 | 0 | 100 | 100 | 87 | 100 | 100 |
| | 20 | 0 | 100 | 100 | 93 | 100 | 100 |
| | 2 | 0 | 100 | 100 | 100 | 100 | 100 |
| | 0.2 | 0 | 0 | 20 | 100 | 87 | 93 |
| Cyromazine | 200 | 0 | 0 | 0 | 100 | 80 | 40 |
| | 20 | 0 | 0 | 0 | 100 | 60 | 40 |
| | 2 | 0 | 0 | 0 | 100 | 20 | 0 |
| | 0.2 | 0 | 0 | 0 | 100 | 20 | 0 |
| Dicofol | 200 | 0 | 0 | 0 | 100 | 100 | 100 |
| | 20 | 0 | 0 | 0 | 100 | 80 | 100 |
| | 2 | 0 | 0 | 0 | 100 | 60 | 20 |
| | 0.2 | 0 | 0 | 0 | 100 | 20 | 0 |
| Diflumetorim | 200 | 100 | 100 | 100 | 100 | 100 | 100 |
| | 20 | 100 | 100 | 100 | 100 | 100 | 100 |
| | 2 | 30 | 60 | 60 | 100 | 90 | 90 |
| | 0.2 | 0 | 0 | 0 | 100 | 20 | 10 |
| Etoxazole | 200 | 0 | 0 | 0 | 100 | 80 | 80 |
| | 20 | 0 | 0 | 0 | 100 | 60 | 60 |
| | 2 | 0 | 0 | 0 | 100 | 60 | 40 |
| | 0.2 | 0 | 0 | 0 | 100 | 40 | 40 |
| Etofenprox | 20 | 60 | 100 | 100 | 100 | 100 | 100 |
| | 2 | 0 | 80 | 80 | 100 | 100 | 100 |
| | 0.2 | 0 | 20 | 20 | 100 | 100 | 100 |
| | 0.02 | 0 | 0 | 0 | 100 | 60 | 60 |
| d-d, trans cyphenothrin | 20 | 0 | 40 | 60 | 100 | 100 | 100 |
| | 2 | 0 | 0 | 0 | 100 | 100 | 100 |
| | 0.2 | 0 | 0 | 0 | 100 | 60 | 100 |
| | 0.02 | 0 | 0 | 0 | 100 | 60 | 20 |
| Fenitrothion | 20 | 0 | 100 | 100 | 100 | 100 | 100 |
| | 2 | 0 | 100 | 100 | 100 | 100 | 100 |
| | 0.2 | 0 | 20 | 100 | 100 | 80 | 100 |
| | 0.02 | 0 | 0 | 0 | 100 | 40 | 40 |
| Fipronil | 20 | 0 | 100 | 100 | 100 | 100 | 100 |
| | 2 | 0 | 40 | 100 | 100 | 80 | 100 |
| | 0.2 | 0 | 20 | 40 | 100 | 60 | 100 |
| | 0.02 | 0 | 0 | 20 | 100 | 0 | 0 |
| Fluazinam | 200 | 20 | 90 | 90 | 100 | 100 | 100 |
| | 20 | 20 | 70 | 80 | 100 | 100 | 100 |
| | 2 | 0 | 0 | 0 | 100 | 30 | 20 |
| | 0.2 | 0 | 0 | 0 | 100 | 30 | 20 |
| Thiamethoxam | 200 | 0 | 80 | 80 | 100 | 100 | 100 |
| | 20 | 0 | 60 | 40 | 100 | 60 | 100 |
| | 2 | 0 | 40 | 40 | 100 | 60 | 100 |
| | 0.2 | 0 | 0 | 0 | 100 | 20 | 40 |
| Imidacloprid | 200 | 40 | 40 | 60 | 100 | 100 | 100 |
| | 20 | 0 | 20 | 60 | 100 | 100 | 100 |
| | 2 | 0 | 20 | 20 | 100 | 100 | 100 |
| | 0.2 | 0 | 0 | 0 | 100 | 20 | 0 |
| Clothianidin | 200 | 0 | 0 | 20 | 100 | 100 | 100 |
| | 20 | 0 | 0 | 20 | 100 | 100 | 100 |
| | 2 | 0 | 0 | 0 | 100 | 100 | 100 |
| | 0.2 | 0 | 0 | 0 | 100 | 20 | 0 |
| Dinotefuran | 200 | 40 | 100 | 100 | 100 | 100 | 100 |
| | 20 | 0 | 40 | 80 | 100 | 100 | 100 |
| | 2 | 0 | 40 | 40 | 100 | 80 | 60 |
| | 0.2 | 0 | 0 | 0 | 100 | 80 | 60 |
| Spinosad | 200 | 60 | 40 | 40 | 100 | 100 | 100 |
| | 20 | 40 | 0 | 0 | 100 | 100 | 80 |
| | 2 | 40 | 0 | 0 | 100 | 100 | 100 |
| | 0.2 | 40 | 0 | 0 | 100 | 80 | 100 |
| Fenoxycarb | 200 | 20 | 0 | 0 | 100 | 80 | 80 |
| | 20 | 20 | 0 | 0 | 100 | 80 | 80 |
| | 2 | 0 | 0 | 0 | 100 | 80 | 80 |
| | 0.2 | 0 | 0 | 0 | 100 | 40 | 40 |
| Picoxystrobin | 200 | 100 | 100 | 100 | 100 | 100 | 100 |
| | 20 | 30 | 90 | 100 | 100 | 100 | 100 |
| | 2 | 0 | 50 | 0 | 100 | 80 | 80 |
| | 0.2 | 0 | 0 | 0 | 100 | 30 | 20 |
| Pyriproxyfen | 200 | 0 | 0 | 0 | 100 | 80 | 80 |
| | 20 | 0 | 0 | 0 | 100 | 60 | 60 |
| | 2 | 0 | 0 | 0 | 100 | 60 | 60 |
| | 0.2 | 0 | 0 | 0 | 100 | 60 | 60 |
| Propoxur | 20 | 100 | 100 | 100 | 100 | 100 | 100 |
| | 2 | 100 | 100 | 100 | 100 | 100 | 100 |
| | 0.2 | 0 | 100 | 100 | 100 | 100 | 100 |
| | 0.02 | 0 | 0 | 0 | 100 | 40 | 40 |
| Diafenthiuron | 200 | 100 | 100 | 100 | 100 | 100 | 100 |
| | 20 | 100 | 0 | 0 | 100 | 100 | 80 |
| | 2 | 100 | 0 | 20 | 100 | 100 | 60 |
| | 0.2 | 60 | 0 | 20 | 100 | 60 | 0 |
| Buprofezin | 200 | 0 | 0 | 0 | 100 | 80 | 40 |
| | 20 | 0 | 0 | 0 | 100 | 100 | 60 |
| | 2 | 0 | 0 | 0 | 100 | 100 | 60 |
| | 0.2 | 0 | 0 | 0 | 100 | 80 | 60 |
| Fluacrypyrim | 200 | 0 | 20 | 80 | 100 | 100 | 100 |
| | 20 | 0 | 0 | 0 | 100 | 100 | 100 |
| | 2 | 0 | 0 | 0 | 100 | 80 | 100 |
| | 0.2 | 0 | 0 | 0 | 100 | 60 | 40 |
| Metaflumizone | 200 | 0 | 0 | 80 | 100 | 100 | 100 |
| | 20 | 0 | 0 | 0 | 100 | 100 | 100 |
| | 2 | 0 | 0 | 0 | 100 | 100 | 100 |
| | 0.2 | 0 | 0 | 0 | 100 | 40 | 60 |
| Flubendiamide | 200 | 0 | 0 | 0 | 100 | 60 | 40 |
| | 20 | 0 | 0 | 0 | 100 | 80 | 40 |
| | 2 | 0 | 0 | 0 | 100 | 80 | 40 |
| | 0.2 | 0 | 0 | 0 | 100 | 80 | 40 |
| Azadirachtin | 200 | 0 | 0 | 0 | 100 | 80 | 80 |
| | 20 | 0 | 0 | 0 | 100 | 60 | 40 |
| | 2 | 0 | 0 | 0 | 100 | 20 | 20 |
| | 0.2 | 0 | 0 | 0 | 100 | 20 | 20 |
| Compound 48 | 200 | 100 | 100 | 100 | 100 | 100 | 100 |
| | 20 | 100 | 100 | 100 | 100 | 100 | 100 |
| | 2 | 60 | 100 | 100 | 100 | 100 | 100 |
| | 0.2 | 20 | 0 | 0 | 100 | 80 | 100 |
| Compound 49 | 200 | 50 | 100 | 100 | 100 | 100 | 90 |
| | 20 | 50 | 100 | 100 | 100 | 100 | 90 |
| | 2 | 0 | 60 | 60 | 100 | 90 | 90 |
| | 0.2 | 0 | 0 | 0 | 90 | 50 | 10 |
| Compound 54 | 200 | 100 | 100 | 100 | 100 | 100 | 100 |
| | 20 | 100 | 100 | 100 | 100 | 100 | 100 |
| | 2 | 0 | 60 | 40 | 100 | 100 | 100 |
| | 0.2 | 0 | 0 | 0 | 90 | 60 | 10 |
| Sulfoxaflor | 200 | 20 | 80 | 100 | 100 | 90 | 100 |
| | 20 | 0 | 70 | 80 | 100 | 70 | 90 |
| | 2 | 0 | 0 | 60 | 100 | 30 | 60 |
| | 0.2 | 0 | 0 | 30 | 100 | 0 | 20 |
| Tebufenpyrad | 200 | 0 | 73 | 67 | 93 | 100 | 100 |
| | 20 | 0 | 13 | 20 | 93 | 80 | 73 |
| | 2 | 0 | 0 | 0 | 93 | 27 | 13 |
| | 0.2 | 0 | 0 | 0 | 93 | 0 | 0 |
| Flupyradifurone | 200 | 0 | 20 | 30 | 100 | 70 | 90 |
| | 20 | 0 | 0 | 10 | 100 | 50 | 60 |
| | 2 | 0 | 0 | 0 | 100 | 20 | 20 |
| | 0.2 | 0 | 0 | 0 | 100 | 10 | 0 |
| Emamectin benzoate | 200 | 0 | 40 | 90 | 100 | 100 | 100 |
| | 20 | 0 | 40 | 90 | 100 | 100 | 100 |
| | 2 | 0 | 0 | 10 | 100 | 60 | 60 |
| | 0.2 | 0 | 0 | 0 | 100 | 30 | 20 |
| Trifloxystrobin | 200 | 80 | 0 | 0 | 100 | 100 | 100 |
| | 20 | 70 | 0 | 0 | 100 | 100 | 100 |
| | 2 | 50 | 0 | 0 | 100 | 60 | 70 |
| | 0.2 | 0 | 0 | 0 | 100 | 0 | 0 |
| Triflumizopyrim | 200 | 0 | 40 | 40 | 100 | 100 | 100 |
| | 20 | 0 | 0 | 10 | 100 | 90 | 100 |
| | 2 | 0 | 0 | 0 | 100 | 50 | 50 |
| | 0.2 | 0 | 0 | 0 | 100 | 0 | 0 |

## Claims

1. A method for controlling a nuisance, disease carrying mosquito comprising: applying a composition containing a knockdown or blood feed inhibiting effective amount of a first insecticide (a) 4-trifluoromethylnicotinamide and a second insecticide (b) to such imosquito or to a locus where such control is desired, wherein the the second insecticide (b) is selected from the group consisting of abamectin, amitraz, broflanilide, cyromazine, dicofol, diflumetorim, etoxazole, fenitrothion, fenazaquin, fenpyroximate, fluazinam, picoxystrobin, propoxur, tebufenpyrad, and a compound represented by the formulae 42 - 47, 50 - 53 and 55 - 63:
| | |
|---|---|
| 42 | 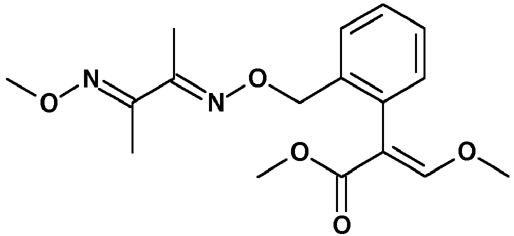 |
| 43 | 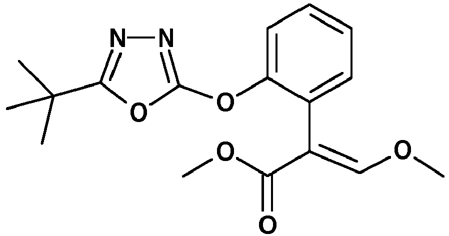 |
| 44 | 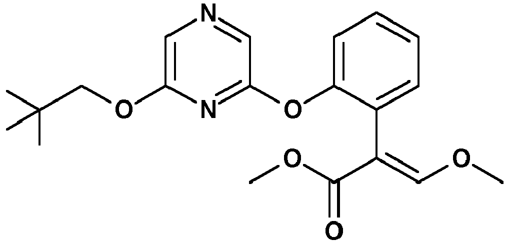 |
| 45 | 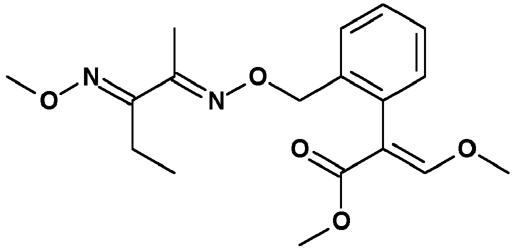 |
| 46 | 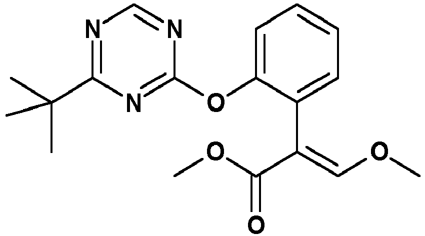 |
| 47 | 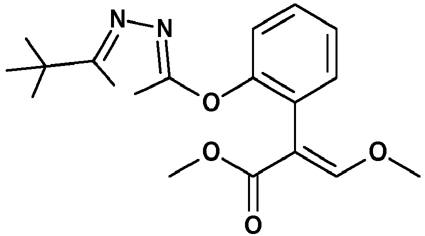 |
| 50 | 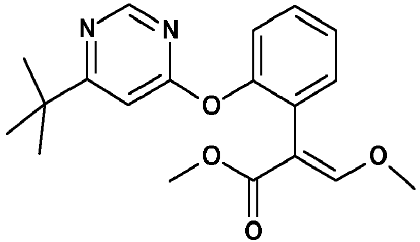 |
| 51 | 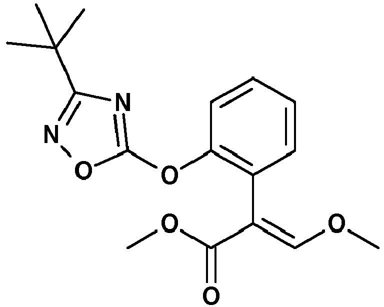 |
| 52 | 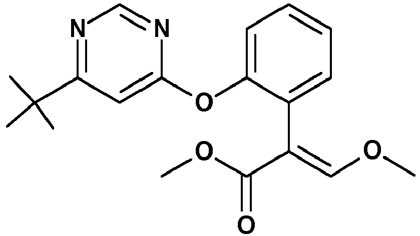 |
| 53 | 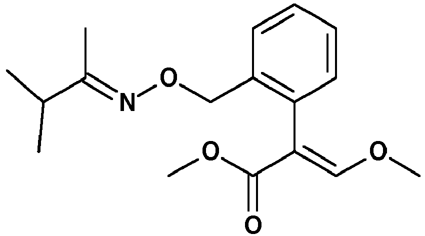 |
| 55 | 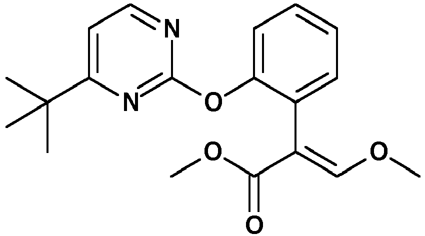 |
| 56 | 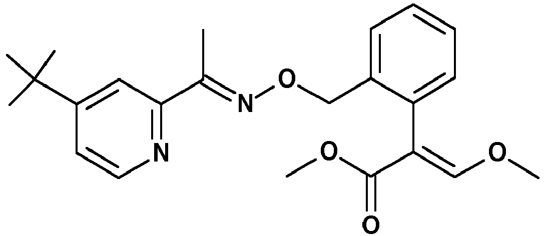 |
| 57 | 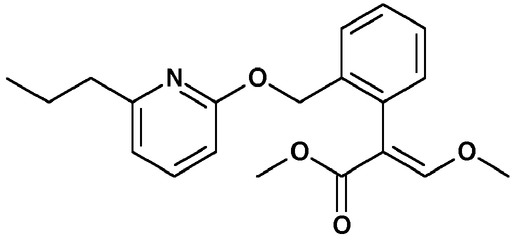 |
| 58 | 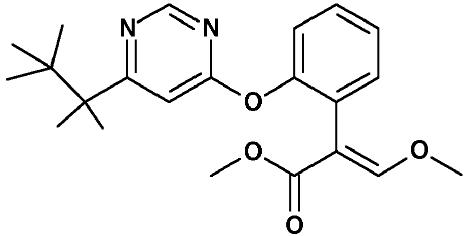 |
| 59 | 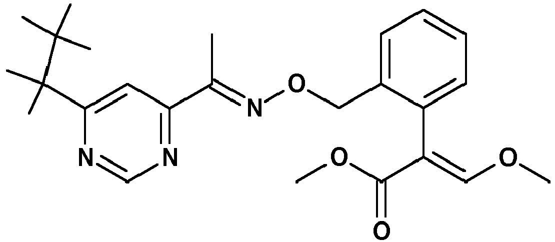 |
| 60 | 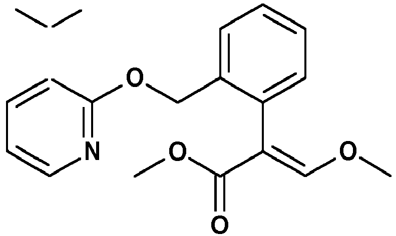 |
| 61 | 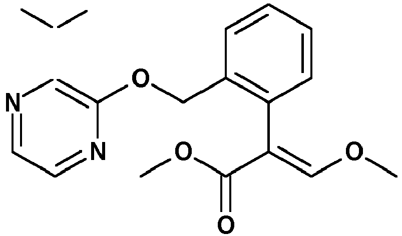 |
| 62 | 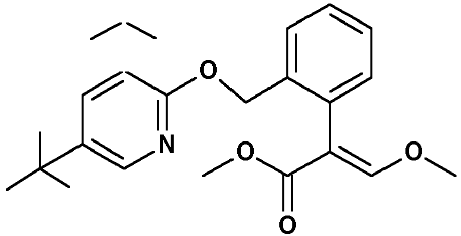 |
| 63 | 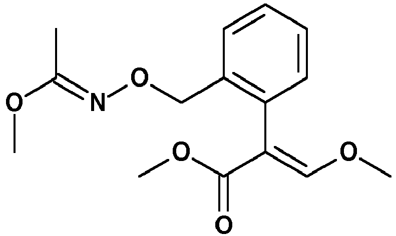 |

2. A method for controlling mosquitoes, the method comprising applying to the mosquito or to a locus of potential or known interaction between the human or mammal and the mosquito, an active compound composition comprising a knockdown or blood feed inhibiting effective amount of a composition comprising a mixture as described in claim 1.

3. The method of claim 2, wherein the active compound composition is applied to a non-living material or substrate at a locus of potential or known interaction between the mosquito and said human or mammal.

4. The method of claim 2, wherein the mosquito is selected from *Aedes aegypti, Aedes albopictus, Aedes japonicas, Aedes vexans, Culex molestus, Culex pallens, Culex pipiens, Culex quinquefasciatus, Culex restuans, Culex tarsalis, Anopheles albimanus, Anopheles arabiensis, Anopheles darlingi, Anopheles dirus, Anopheles funestus, Anopheles gambiae s.l., Anopheles melas, Anopheles minimus, Anopheles sinensis, Anopheles stephensi, Mansonia titillans.*

5. The method of claims 4, wherein said mosquito is a vector of malaria.

6. A polymeric material for causing knockdown or blood feed inhibition of a dipteran, culicoide, or cimicidae insect pest incorporated with 4-trifluoromethylnicotinamide mixture as defined in claim 1, which material is useful for making substrate or non-living material, such as threads, fibres, yarns, pellets, nets and weaves.

7. A kit for treating a fibre, yarn, net and weave by coating wash resistant insect control properties thereto comprising: a first sachet comprising a pre-measured amount of a 4-trifluoromethylnicotinamide mixture as defined in claim 1, and a second sachet comprising a pre-measured amount of at least one polymeric binder.

8. A method for treating a fibre, yarn, net and weave by coating wash resistant insect control properties thereto comprising (i) preparing a treatment composition, which comprises a 4-trifluoromethylnicotinamide mixture as defined in claim 1, (ii) treating said fibre, yarn, net and weave and (iii) drying the resulting treated a fibre, yarn, net and weave.

9. A method of preparing a polymeric material impregnated with a 4-trifluoromethylnicotinamide mixture as defined in claim 1, which material is useful for making substrate or non-living material for causing knockdown or blood feed inhibition of a dipteran or cimicidae insect pest, such as threads, fibres, yarns, pellets, nets and weaves, which method comprises mixing a polymer with a 4-trifluoromethylnicotinamide mixture as defined in claim 1 at a temperature between 120 to 250 °C.

10. A method for mosquito vector-control by knockdown or blood feed inhibition which method comprises (a) applying a knockdown or blood feed inhibiting effective amount of a liquid composition comprising a 4-trifluoromethylnicotinamide mixture as defined in claim 1, and a polymeric binder, and optionally, one or more other synergists, to a surface of a dwelling; and/or (b) placing a substrate or non-living material incorporated with said at least one said 4-(trifluoromethyl)pyridine compound, and optionally an additive, one or more other insecticides, and/or synergists, within a dwelling.

11. A net incorporated with a 4-trifluoromethylnicotinamide mixture as defined in claim 1 having a biological activity in accordance with the WHOPES guidelines of a knockdown after 60 minutes of between 95 percent and 100 percent and/or a mortality after 24 hours of between 80 percent and 100 percent after 20 washes.

12. An insecticidal composition comprising an insecticidally effective amount of a a 4-trifluoromethylnicotinamide mixture as defined in claim 1.
